(19) Europäisches Patentamt
European Patent Office
Office européen des brevets

(11) **EP 3 872 432 B1**

(12) **EUROPEAN PATENT SPECIFICATION**

(45) Date of publication and mention
of the grant of the patent:
**21.06.2023 Bulletin 2023/25**

(21) Application number: **21164660.9**

(22) Date of filing: **24.03.2021**

(51) International Patent Classification (IPC):
*F27B 7/42* (2006.01)     *C04B 7/36* (2006.01)
*F27B 7/20* (2006.01)     *F27D 19/00* (2006.01)
*F27D 21/00* (2006.01)     *G06N 3/00* (2023.01)
*G06N 3/04* (2023.01)     *G06N 3/08* (2023.01)

(52) Cooperative Patent Classification (CPC):
**C04B 7/361; F27B 7/20; F27B 7/42; F27D 19/00;
F27D 21/00; G06N 3/006; G06N 3/045; G06N 3/08;**
F27D 2019/0096

(54) **METHOD, APPARATUS AND ELECTRONIC DEVICE FOR CONSTRUCTING REINFORCEMENT LEARNING MODEL**

VERFAHREN, EINRICHTUNG UND ELEKTRONISCHE VORRICHTUNG ZUR KONSTRUKTION EINES VERSTÄRKUNGSLERNMODELLS

PROCÉDÉ, APPAREIL ET DISPOSITIF ÉLECTRONIQUE POUR LA CONSTRUCTION D'UN MODÈLE D'APPRENTISSAGE PAR RENFORCEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.09.2020 CN 202010948561**

(43) Date of publication of application:
**01.09.2021 Bulletin 2021/35**

(73) Proprietor: **BEIJING BAIDU NETCOM SCIENCE
AND
TECHNOLOGY CO. LTD.
100085 Beijing (CN)**

(72) Inventors:
• **LIU, Ying
Beijing, 100085 (CN)**
• **XIE, Xin
Beijing, 100085 (CN)**
• **XU, Ming
Beijing, 100085 (CN)**
• **QI, Yuezhen
Beijing, 100085 (CN)**
• **LI, Ruifeng
Beijing, 100085 (CN)**
• **BAI, Lu
Beijing, 100085 (CN)**

(74) Representative: **Witte, Weller & Partner
Patentanwälte mbB
Postfach 10 54 62
70047 Stuttgart (DE)**

(56) References cited:
**CN-A- 106 202 946     CN-A- 109 147 878
CN-A- 109 165 798     CN-A- 109 761 517**

• **Zhou Xiaojie ET AL: "Supervisory Control for
Rotary Kiln Temperature Based on
Reinforcement Learning" In: "LECTURE NOTES
IN CONTROL AND INFORMATION SCIENCES", 1
January 2006 (2006-01-01), BERLIN, DE,
XP055820193, ISSN: 0170-8643 vol. 344, pages
428-437, DOI: 10.1007/978-3-540-37256-1_49,
Retrieved from the Internet:
URL:http://dx.doi.org/10.1007/978-3-540-37
256-1_49> * the whole document ***

## Description

TECHNICAL FIELD

The present disclosure relates to the field of data processing technology, particularly to the field of big data and deep learning technology, and more particularly to a method, apparatus and electronic device for constructing a reinforcement learning model, and relates to a computer readable storage medium.

BACKGROUND

There are three main stages in the production process of cement: raw material mining and grinding, calcination of raw material to clinker, and clinker reprocessing. The calcination of raw material to clinker is a very complicated process, and the costs of coal and electricity consumed in the process is very high. In the calcination process, main consumption is coal and electricity, of which coal consumption accounts for the largest proportion. Thus, how to reasonably manage and control a coal feed amount in the calcination stage is the key to decrease the cost and increase the efficiency in the cement industry.

CN109165798A discloses a method and a system for on-line prediction of free calcium oxide content of cement clinker. The method includes: obtaining the input vector and output vector of the deep belief network model; constructing a deep belief network model for calcium oxide content prediction according to the input vector and output vector; acquiring a plurality of training samples of a deep belief network model, wherein the training samples include input samples and output samples; training repeatedly the depth belief network model according to the training samples, and generating the depth belief network model after training; obtaining the input variables related to the free calcium oxide index in the cement firing process as the current input vectors, wherein the input vectors are the input vectors introduced into the time series; obtaining the free calcium oxide content of cement clinker d by predicting the depth of belief network model after the current input vector being input into the training.

CN109761517A discloses a method for controlling clinker aggregate production on the basis of free calcium prediction data. The method comprises the following steps of collecting signals in the clinker aggregate production process, including second wind temperature, grate cooler first-section advancing pressure, laboratory clinker aggregate free calcium value, laboratory clinker aggregate KH value and quality data collection confirm button signals; calculating predicated free calcium content value according to the collected signals; setting the control target of the free calcium by an operator; performing correction calculation by combining with the prediction to obtain fCaO (correction value) and the model relationship between the fCaO and the secondary wind temperature; calculating the secondary wind temperature target value; writing automatically the target value into the target parameter of the model among the secondary wind temperature, the kiln head coal feeding and kiln material feeding; regulating automatically the kiln head coal and kiln material feeding quantity.

CN106202946A discloses a deep belief network model based cement clinker fCaO prediction method. The method comprises the steps that major variables capable of reflecting the firing situation of a cement clinker being preliminarily selected to form an auxiliary variable set, and a prediction variable being the cement clinker fCaO content; a field instrument and an operator recorder acquiring respectively auxiliary variables and field data of the cement clinker fCaO content, a grey relational analysis method being adopted conduct dimensionality reduction on the auxiliary variable set; parameters in a deep belief network structure, namely parameters training the deep belief network being determined according to a deep belief network algorithm and sample data volume, and further optimization of weighting and bias of the whole network being achieved; a counter-propagation algorithm being adopted to conduct error correction on the determined parameters in a deep belief network structure, and further a prediction model of the cement clinker fCaO being determined; real-time data of the auxiliary variable set being acquired, and errors of the obtained real-time data of the auxiliary variable set being eliminated according to 3delta criterions; further, the cement clinker fCaO content being predicted.

CN109147878A discloses a soft measurement method of free calcium of cement clinker. The method comprises the following steps: selecting 10 variables as auxiliary variables for clinker fCaO soft measurement according to a cement process, inputting the time sequence, serving as a model, of each variable, and performing normalization processing on the time sequence of each selected variable; establishing a clinker fCaO soft measurement model based on a multi-variable time sequence convolutional neural network according to the characteristic of the time sequence in the cement sintering process, determining an initial parameter of an MT-CNN model and performing forward-direction training on the network; performing supervised training by utilizing error reverse fine adjustment, optimizing weight w and bias b in the MT-CNN by correcting the error, and predicting the cement clinker fCaO in real time by utilizing the trained MT-CNN model.

Zhou Xiaojie et al.:"Supervisory Control for Rotary Kiln Temperature Based on Reinforcement Learning" in "LECTURE NOTES IN CONTROL AND INFORMATION SCIENCES", 1 January 2006, vol. 344, pp.428-437 discloses a Q-learning-based supervisory control approach for burning zone temperature. The signals of human intervention are regarded as the reinforcement learning signals, so that the set point of burning zone temperature can be duly adjusted to adapt the fluctuations of the boundary conditions. This supervisory control system has been developed in DCS and successfully applied in an alumina rotary kiln. Satisfactory results have shown that the adaptability and performances of the control system have been improved effectively, and remarkable benefit has been obtained.

## SUMMARY

Embodiments of the present disclosure propose a method, apparatus and electronic device for constructing a reinforcement learning model. The embodiments also refers to a computer readable storage medium.

In a first aspect, a computer-implemented method for constructing a reinforcement learning model and guiding a calciner coal feeding operation and kiln head coal feeding operation is provided according to claim 1. The method comprises: establishing a first simulation model between a calciner coal feed amount and a calciner temperature; establishing a second simulation model among an adjustable variable of a kiln head coal feed amount, and controlled variables of a kiln current, a secondary air temperature, and a smoke chamber temperature; establishing a prediction model among: an under-grate pressure; the calciner temperature output by the first simulation model; the kiln current, the secondary air temperature, and the smoke chamber temperature output by the second simulation model; and a free calcium content, the prediction model predicting a prediction value of a corresponding free calcium content based on actual values of the under-grate pressure, the calciner temterature, the kiln current, the secondary air temperature, and the smoke chamber temperature; and constructing a reinforcement learning model that represents an association between a coal feed amount and the free calcium content according to a preset reinforcement learning model architecture, using the first simulation model, the second simulation model, and the prediction model; the coal feed amount comprising the calciner coal feed amount and the kiln head coal feed amount; receiving a target free calcium content given in a target scenario; determining a theoretical coal feed amount corresponding to the target free calcium content using the reinforcement learning model; wherein, the theoretical coal feed amount comprises a theoretical calciner coal feed amount and a theoretical kiln head coal feed amount; and guiding a calciner coal feeding operation and a kiln head coal feeding operation in the target scenario based on the theoretical coal feed amount; wherein, the constructing comprises: constructing the reinforcement learning model according to an Actor-Critic reinforcement learning model architecture; wherein the constructing the reinforcement learning model according to an Actor-Critic reinforcement learning model architecture comprises: constructing the calciner coal feed amount, the kiln head coal feed amount, and the under-grate pressure as an Action represented by a three-dimensional vector; constructing a State represented by a ten-dimensional vector by at least using followings as a dimension respectively: a calciner temperature, a kiln current, a secondary air temperature, and a smoke chamber temperature at a previous moment; a calciner temperature, a kiln current, a secondary air temperature, a smoke chamber temperature and an under-grate pressure at a current moment; and a prediction value of the free calcium content output by the prediction model; wherein, after each execution of an Action, the State is updated through a preset simulation environment; determining a Reward indicating whether the output prediction value of the free calcium content is within a preset target value range, and indicating a current coal feed amount; and constructing the reinforcement learning model that represents the association between the coal feed amount and the free calcium content, based on the Action, the State and the Reward.

In a second aspect, a data-processing apparatus for constructing a reinforcement learning model and guiding a calciner coal feeding operation and kiln head coal feeding operation is provided according to claim 4. The apparatus comprises: means for carrying step of establishing a first simulation model between a calciner coal feed amount and a calciner temperature; means for carrying out step of establishing a second simulation model among an adjustable variable of a kiln head coal feed amount, and controlled variables of a kiln current, a secondary air temperature, and a smoke chamber temperature; means for carrying out step of establishing a prediction model among an under-grate pressure; the calciner temperature output by the first simulation model; the kiln current, the secondary air temperature, and the smoke chamber temperature output by the second simulation model; and a free calcium content, the prediction model predicting a prediction value of a corresponding free calcium content based on actual values of the under-grate pressure, the calciner temperature, the kiln current, the secondary air temperature, and the smoke chamber temperature; and means for carrying out step of constructing a reinforcement learning model that represents an association between a coal feed amount and the free calcium content according to a preset reinforcement learning model architecture, using the first simulation model, the second simulation model, and the prediction model; the coal feed amount comprising the calciner coal feed amount and the kiln head coal feed amount; means for carrying out step of receiving a target free calcium content given in a target scenario; means for carrying out step of determining a theoretical coal feed amount corresponding to the target free calcium content using the reinforcement learning model; wherein, the theoretical coal feed amount comprises a theoretical calciner coal feed amount and a theoretical kiln head coal feed amount; and means for carrying out step of guiding a calciner coal feeding operation and a kiln head coal feeding operation in the target scenario based on the theoretical coal feed amount; wherein, the means for carrying out step of constructing comprises: an A2C reinforcement learning model construction subunit, configured to construct the reinforcement learning model according to an Actor-Critic reinforcement learning model architecture; wherein the means for carrying out step of constructing reinforcement learning model comprises: constructing the calciner coal feed amount, the kiln head coal feed amount, and the under-grate pressure as an Action represented by a three-dimensional vector; constructing a State represented by a ten-dimensional vector by at least using followings as a dimension respectively: a calciner temperature, a kiln current, a secondary air temperature, and a smoke chamber temperature at a previous moment; a calciner temperature, a kiln current, secondary air temperature, a smoke chamber temperature and an under-grate pressure at a current moment; and a prediction value of the free calcium content output by the prediction model; wherein, after each execution of an Action, the State is updated through a preset simulation environment; determining a Reward indicating whether the output prediction value of the free calcium content is within a preset target value range, and indicating a current coal feed amount; and constructing the reinforcement learning model that represents the association between the coal feed amount and the free calcium content, based on the Action, the State and the Reward.

In a third aspect, a computer-readable medium is provided according to claim 7, storing a computer program thereon, wherein the program, when executed by a processor, causes the processor to implement the method provided by the first aspect.

In a fourth aspect, a computer program product is provided according to claim 8, including a computer program, where the computer program, when executed by a processing apparatus, implements the method provided by the first aspect.

The method, apparatus for constructing a reinforcement learning model, electronic device, and computer readable storage medium provided by the embodiments of the present disclosure, first establishing the first simulation model between the calciner coal feed amount and the calciner temperature, and establishing the second simulation model between the kiln head coal feed amount and the kiln current, the secondary air temperature, and the smoke chamber temperature; then establishing the prediction model between the under-grate pressure, the calciner temperature output by the first simulation model, and the kiln current, the secondary air temperature, the smoke chamber temperature output by the second simulation model, and the free calcium content; and finally constructing the reinforcement learning model that represents the association between the coal feed amount and the free calcium content according to the preset reinforcement learning model architecture, using the first simulation model, the second simulation model, and the prediction model, the coal feed amount including the calciner coal feed amount and the kiln head coal feed amount.

Different from the existing technology that may not meet the needs of a complex scenario of cement calcination, the present disclosure introduces the concept of reinforcement learning into a cement calcination scenario. Based on the established simulation models and the prediction model, under the reinforcement learning architecture, the reinforcement learning model that may represent the corresponding relationship between the input coal feed amount and the free calcium content of a final product under the influence of a plurality of parameters is constructed. In addition, since the reinforcement learning model is different from the compensator characteristics of other machine learning models, it is more compatible with the complex and multi-parameter cement calcination scenario, making the determined corresponding relationship more accurate, and at the same time a strong generalization ability of the reinforcement learning model may also be more simply applied to other similar scenarios.

It should be understood that the content described in this section is not intended to identify key or important features of the embodiments of the present disclosure, nor is it intended to limit the scope of the present disclosure. Other features of the present disclosure will be easily understood by the following description.

BRIEF DESCRIPTION OF THE DRAWINGS

By reading the detailed description of non-limiting embodiments with reference to the following accompanying drawings, other features, objectives and advantages of the present disclosure will become more apparent:

Fig. 1 is an exemplary system architecture in which the present disclosure may be implemented;

Fig. 2 is a flowchart of a method for constructing a reinforcement learning model according to an embodiment of the present disclosure;

Fig. 3 is a flowchart of another method for constructing a reinforcement learning model according to an embodiment of the present disclosure;

Fig. 4 is a schematic flowchart of the method for constructing a reinforcement learning model in an application scenario according to an embodiment of the present disclosure;

Fig. 5 is a structural block diagram of an apparatus for constructing a reinforcement learning model according to an embodiment of the present disclosure; and

Fig. 6 is a block diagram of an electronic device suitable for implementing the method for constructing a reinforcement learning model according to an embodiment of the present disclosure.

## DETAILED DESCRIPTION OF EMBODIMENTS

The present disclosure will be further described in detail below with reference to the accompanying drawings and embodiments. It may be understood that the embodiments described herein are only used to explain the relevant disclosure, but not to limit the disclosure. In addition, it should be noted that, for ease of description, only the parts related to the relevant disclosure are shown in the accompanying drawings.

It should be noted that the embodiments in the present disclosure and the features in the embodiments may be combined with each other on a non-conflict basis. The present disclosure will be described below in detail with reference to the accompanying drawings and in combination with the embodiments.

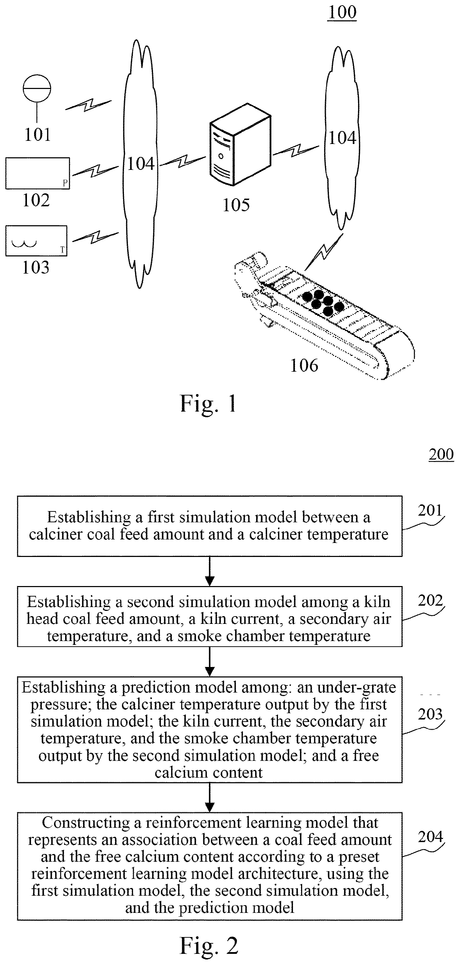

Fig. 1 shows an exemplary system architecture 100 to which the embodiments of the method, apparatus and electronic device for constructing a reinforcement learning model, and computer readable storage medium of the present disclosure may be applied.

As shown in Fig. 1, the system architecture 100 may include sensors 101, 102, and 103, a network 104, a server 105, and a coal feeding device 106. The network 104 is used to provide a communication link medium between the sensors 101, 102, and 103 and the server 105, and between the server 105 and the coal feeding device 106. The network 104 may include various connection types, such as wired, wireless communication links, or optic fibers.

Various types of information acquired by the sensors 101, 102, and 103 may be sent to the server 105 through the network 104, and the server 105 may generate control instructions based on the received information after processing and then issue the control instructions to the coal feeding device 106 through the network 104. The above communication may be implemented by various applications installed on the sensors 101, 102, and 103, the server 105, and the coal feeding device 106, such as information transmission applications, coal feed optimization control applications, or control instruction sending and receiving applications.

Typically, the sensors 101, 102, and 103 are physical components (such as pressure sensors, temperature sensors, current sensors) installed in relevant positions of cement calcination-related devices (such as calciners, clinker kilns) to receive actual signals generated by actual devices. However, in test and simulation scenarios, the sensors 101, 102, and 103 may also be virtual components provided on virtual related devices of cement calcination, to receive parameters or simulation parameters predetermined in the test scenarios. The server 105 may be hardware or software. When the server 105 is hardware, it may be implemented as a distributed server cluster composed of a plurality of servers, or as a single server; when the server is software, it may be implemented as a plurality of software or software modules, or as a single software or software module, which is not limited herein. In an actual scenario, the coal feeding device 106 may be embodied as a physical device such as a coal conveyor belt or a coal conveyor. In a virtual test scenario, it may be directly replaced by a virtual device having a controlled coal conveying capacity.

The server 105 may provide various services through various built-in applications. A coal feed optimization control application that may provide a coal feed optimization control service in cement calcination may be used as an example. The server 105 operates the coal feed optimization control application and may achieve the following effects: first, receive an instruction for a target free calcium content required for cement clinker production of the present batch; then, input the target free calcium content into a pre-constructed reinforcement learning model that represents a corresponding relationship between a coal feed amount and a free calcium content to obtain a theoretical coal feed amount output by the reinforcement learning model; next, issue a corresponding coal feed amount instruction to the coal feeding device 106 using a theoretical calciner coal feed amount and a theoretical kiln head coal feed amount included in the theoretical coal feed amount.

The reinforcement learning model used by the server 105 in the above process may be constructed based on the following method: first, receiving a large amount of historical calciner coal feed amount, calciner temperature, kiln head coal feed amount, kiln current, secondary air temperature, smoke chamber temperature and under-grate pressure from the sensors 101, 102, and 103 through the network 104; then, establishing a first simulation model between the calciner coal feed amount and the calciner temperature, and establishing a second simulation model among the kiln head coal feed amount, the kiln current, the secondary air temperature, and the smoke chamber temperature; then, establishing a prediction model among: the under-grate pressure; the calciner temperature output by the first simulation model; the kiln current, the secondary air temperature, and the smoke chamber temperature output by the second simulation model; and a free calcium content; and finally, constructing the reinforcement learning model that represents an association between a coal feed amount and the free calcium content according to a preset reinforcement learning model architecture, using the first simulation model, the second simulation model, and the prediction model.

It should be noted that the parameters such as the calciner coal feed amount, the calciner temperature, the kiln head coal feed amount, the kiln current, the secondary air temperature, the smoke chamber temperature, and the under-grate pressure used to construct the simulation models and the prediction model, in addition to being acquired from the sensors 101, 102, and 103, these parameters may also be stored locally in the server 105 in various forms such as log or production inspection data report. Therefore, when the server 105 detects that the data have been stored locally, it may choose to directly acquire the data locally. In this regard, the process of generating the reinforcement learning model may also not require the sensors 101, 102, and 103 and the network 104.

Since the construction of the simulation models, the prediction model, and the reinforcement learning model based on a large number of parameters requires to occupy more computing resources and strong computing power, the method for constructing a reinforcement learning model provided in the subsequent embodiments of the present disclosure is generally performed by the server 105 having strong computing power and more computing resources. Accordingly, the apparatus for constructing a reinforcement learning model is generally also provided in the server 105.

It should be understood that the number of sensors, networks, servers and coal feeding devices in Fig. 1 is merely illustrative. Depending on the implementation needs, there may be any number of sensors, networks, servers and coal feeding devices.

With reference to Fig. 2, Fig. 2 is a flowchart of a method for constructing a reinforcement learning model according to an embodiment of the present disclosure. A flow 200 includes the following steps:

Step 201, establishing a first simulation model between a calciner coal feed amount and a calciner temperature;

This step aims to establish the first simulation model between the calciner coal feed amount and the calciner temperature by an executing body of the method for constructing a reinforcement learning model (for example, the server 105 shown in Fig. 1).

The first simulation model is used to represent a corresponding relationship between the calciner coal feed amount and the calciner temperature. In order to construct the first simulation model that may represent this corresponding relationship, a large number of historical coal feed amount and corresponding historical calciner temperature data are required to be used as sample data to participate in training and construction of the simulation model. For example, the first simulation model that represents the corresponding relationship between the calciner coal feed amount and the calciner temperature may be constructed in the form of the following formula:

$$y(k) = a*y(k-1)+b*u(k-1) \ ;$$

In the formula, y(k) is the calciner temperature at time k, and y(k-1) and u(k-1) are respectively the calciner temperature and the calciner coal feed amount at time k-1 (that is, a previous moment of time K); a and b are respectively undetermined coefficients, and the particular values may be obtained by calculation using the least squares method based on historical data. For example, in a certain experimental scenario, a is 0.983 and b is 0.801.

S202, establishing a second simulation model among a kiln head coal feed amount, a kiln current, a secondary air temperature, and a smoke chamber temperature;

This step aims to establish the second simulation model among the kiln head coal feed amount, the kiln current, the secondary air temperature, and the smoke chamber temperature by the executing body.

Different from the first simulation model, the second simulation model is used to represent a corresponding relationship between the kiln head coal feed amount and the kiln current, the secondary air temperature, and the smoke chamber temperature. In order to construct the second simulation model that may represent this corresponding relationship, a large number of historical kiln head coal feed amount and corresponding historical kiln current, historical secondary air temperature, and historical smoke chamber temperature are required to be used as sample data to participate in training and construction of the simulation model. It is also possible to construct the second simulation model in the same form as the above formula.

It should be noted that the executing body needs to construct the first simulation model and the second simulation model through step 201 and step 202 respectively, because in a cement clinker calcination process, adjustable variables mainly include: feed amount, calciner coal feed amount, kiln head coal feed amount, kiln speed, high temperature fan speed, grate cooler speed, and controlled variables mainly include: calciner outlet temperature, calciner outlet pressure, secondary air temperature, tertiary air temperature, kiln burning zone temperature, kiln head negative pressure, kiln tail temperature, smoke chamber temperature, kiln current, under-grate pressure, and vertical weight. The controlled variable refers to a variable that may not be directly debugged, but may be affected by an adjustable variable.

All of the above variables ultimately act on an index-free calcium content of a calcined finished product. Therefore, in order to ensure a clinker quality of the finished product, it is necessary to monitor these variables during the entire calcination to calculate the quality of the calcined clinker product using these variables. After investigation, the free calcium content is mainly related to the calciner temperature, the kiln current, the secondary air temperature, the smoke chamber temperature, and the under-grate pressure, and these variables are mainly determined by the three adjustable parameters: the calciner coal feed amount, the kiln head coal feed amount, and the under-grate pressure. Therefore, in the case that the present disclosure mainly focuses on coal consumption caused by coal feeding and the clinker quality (i.e., free calcium content), the three adjustable variables may be mainly considered: the calciner coal feed amount, the kiln head coal feed amount, and the under-grate pressure, four controlled variables may be mainly considered: the calciner temperature, the kiln current, the secondary air temperature, and the smoke chamber temperature, and one final target variable may be considered: the free calcium content.

In order to optimize parameter adjustment of the coal feed amount using the reinforcement learning model, the construction of the simulation models that represent parameter changes related to the coal feed amount during cement calcination is indispensable. Therefore, the executing body respectively constructs the first simulation model that represents the corresponding relationship between the controlled variable-the calciner temperature and the adjustable variable-the calciner coal feed amount through step 201, and constructs the second simulation model that represents the corresponding relationship between the controlled variables-the kiln current, the secondary air temperature, the smoke chamber temperature and the adjustable variable-the kiln head coal feed amount through step 202.

Step 203, establishing a prediction model among: an under-grate pressure; the calciner temperature output by the first simulation model; the kiln current, the secondary air temperature, and the smoke chamber temperature output by the second simulation model; and a free calcium content;

On the basis of step 201 and step 202, this step aims to establish the prediction model between the under-grate pressure, the calciner temperature output by the first simulation model, and the kiln current, the secondary air temperature, the smoke chamber temperature output by the second simulation model by the executing body, and the free calcium content.

As described in step 202, it may be considered that the clinker quality index-free calcium content is mainly affected by the five controlled variables of under-grate pressure, calciner temperature, kiln current, secondary air temperature, and smoke chamber temperature. Therefore, in this step, the prediction model between the above five controlled variables and the free calcium content is established, that is, the generated prediction model may predict a prediction value of the corresponding free calcium content based on actual values of the given five controlled variables.

The establishing of the above prediction model requires a large amount of historical data to participate in training, so as to find a more accurate relationship of the influence of the controlled variables on the free calcium content, which may be achieved using various models or algorithms that support multiple input parameters to predict unique output parameter such as SVM (Support Vector Machine), neural network, or tree model, which is not limited herein, and the model or algorithm may be selected based on all possible influencing factors in actual application scenarios.

The large amount of historical data as samples required to construct the models in the above steps may all come from acquisition of various sensors (such as the sensors 101, 102, and 103 shown in Fig. 1) installed on relevant devices used in clinker calcination. For example, the under-grate pressure may be acquired by a pressure sensor installed in a grate cooler, the kiln current may be acquired by a current sensor installed in the kiln head, and for the various temperatures, temperature sensors of different performance and models may be selected based on actual temperature ranges.

Step 204, constructing a reinforcement learning model that represents an association between a coal feed amount and the free calcium content according to a preset reinforcement learning model architecture, using the first simulation model, the second simulation model, and the prediction model.

On the basis of step 203, this step aims to establish the reinforcement learning model that represents the association between the coal feed amount and the free calcium content according to the preset reinforcement learning model architecture, using the first simulation model, the second simulation model, and the prediction model by the executing body.

Although the free calcium content is affected by the five controlled variables of under-grate pressure, calciner temperature, kiln current, secondary air temperature, and smoke chamber temperature, these five controlled variables are respectively controlled by the two adjustable variables, namely, the calciner coal feed amount and the kiln head coal feed amount. In addition, based on the main purpose of the present disclosure, based on the simulation models that represent the corresponding relationships between the adjustable variables and the controlled variables, and the prediction model that represents the corresponding relationship between the controlled variables and the quality index, the reinforcement learning model that may represent the association between the coal feed amount and the free calcium content is constructed according to the reinforcement learning model architecture.

Reinforcement learning (RL), also known as encouragement learning, evaluation learning, or enhancement learning, is one of the paradigms and methodologies of machine learning. Reinforcement learning is used to describe and solve the problem that an agent maximizes returns or achieves a particular goal during interaction with the environment through learning strategies. Different from other neural network deep learning algorithms that simulate biological neural networks, the reinforcement learning algorithm is that the agent learns in a "trial and error" method, obtains a reward guide behavior through interaction with the environment, aims to maximize the reward for the agent. Reinforcement learning is different from supervised learning in connectionist learning, which is mainly manifested in reinforcement signals. A reinforcement signal provided by the environment in reinforcement learning is an evaluation of the quality of a generated action (usually a scalar signal), rather than telling a reinforcement learning system (RLS) how to generate a correct action. Because an external environment provides little information, RLS must rely on its own experience to learn. Using the method, RLS gains knowledge in an action-evaluation environment and improves action plans to adapt to the environment. Deep learning models may also be used in reinforcement learning to form deep reinforcement learning (DRL) having a better effect.

Actor-critic (A2C), PPO, TRPO, and other reinforcement learning model architectures having different characteristics may be used to construct the reinforcement learning model that may represent the corresponding relationship between the coal feed amount and the free calcium content required in this step.

Different from the existing technology that may not meet the needs of a complex scenario of cement calcination, the method for constructing a reinforcement learning model provided in the embodiment of the present disclosure introduces the concept of reinforcement learning into a cement calcination scenario, based on the established simulation models and the prediction model, under the reinforcement learning architecture, the reinforcement learning model that may represent the corresponding relationship between the input coal feed amount under the influence of a plurality of parameters and the free calcium content of a final product is constructed. In addition, since the reinforcement learning model is different from the compensator characteristics of other machine learning models, it is more compatible with the complex and multi-parameter cement calcination scenario, making the determined corresponding relationship more accurate, and at the same time a strong generalization ability of the reinforcement learning model may also be more simply applied to the present disclosure in other similar scenarios.

The existing technology may not meet the needs of a complex scenario of cement calcination, because PID control only considers system deviations, mainly is to track system setting values, but does not support a multi-objective optimization of clinker quality and energy consumption in the cement calcination scenario. On the other hand, due to the real-time control of a plurality of parameters involved in the cement production process, it is also difficult for MPC to achieve unified real-time control of the plurality of parameters. At the same time, the generalization ability of MPC is poor. For a calcination system of similar scenarios, the models need to be re-established each time.

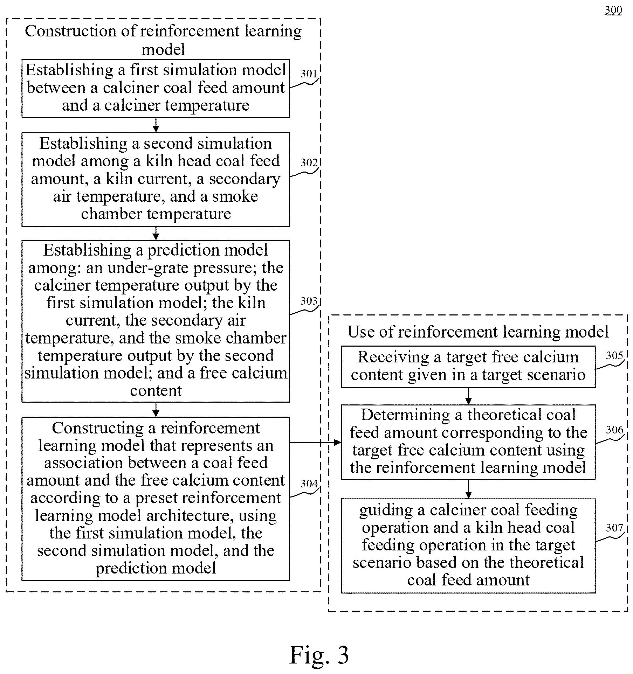

With reference to Fig. 3, Fig. 3 is a flowchart of another method for constructing a reinforcement learning model according to an embodiment of the present disclosure. A flow 300 includes the following steps:

Step 301: establishing a first simulation model between a calciner coal feed amount and a calciner temperature;

Step 302: establishing a second simulation model among a kiln head coal feed amount, a kiln current, a secondary air temperature, and a smoke chamber temperature;

Step 303: establishing a prediction model among: an under-grate pressure; the calciner temperature output by the first simulation model; the kiln current, the secondary air temperature, and the smoke chamber temperature output by the second simulation model; and a free calcium content;

Step 304: constructing a reinforcement learning model that represents an association between a coal feed amount and the free calcium content according to a preset reinforcement learning model architecture, using the first simulation model, the second simulation model, and the prediction model;

The above steps 301-304 are the same as steps 201-204 as shown in Fig. 2. The above steps may be summarized as a construction process of the reinforcement learning model. For contents of the same parts, reference may be made to the corresponding parts of the previous embodiment, and detailed description thereof will be omitted.

Step 305: receiving a target free calcium content given in a target scenario;
On the basis of constructing the available reinforcement learning model in step 304, this step aims to receive the target free calcium content given by a user in the target scenario by the executing body. This step is used as a first step for the reinforcement learning model to instruct the use of the coal feed amount during cement calcination, that is, to acquire a set clinker quality index.

Step 306: determining a theoretical coal feed amount corresponding to the target free calcium content using the reinforcement learning model;
On the basis of step 305, this step aims to determine the theoretical coal feed amount corresponding to the target free calcium content using the reinforcement learning model by the executing body. That is, since the reinforcement learning model may represent the corresponding relationship between the coal feed amount and the free calcium content, given the target free calcium content, the corresponding theoretical coal feed amount may be inversely derived from the corresponding relationship, where the theoretical coal feed amount includes a theoretical calciner coal feed amount and a theoretical kiln head coal feed amount.

Step 307: guiding a calciner coal feeding operation and a kiln head coal feeding operation in the target scenario based on the theoretical coal feed amount.

On the basis of step 306, this step aims to instruct the calciner coal feeding operation and the kiln head coal feeding operation in the target scenario based on the theoretical coal feed amount by the executing body. For example, a coal feeding device (such as the coal feeding device 106 shown in Fig. 1) is controlled to feed a corresponding amount of coal to the calciner and the kiln head.

Since this embodiment of the present disclosure include all the technical features of the previous embodiment (that is, the construction steps of the reinforcement learning model), it should have all the beneficial effects of the previous embodiment. On this basis, this embodiment of the present disclosure also provides a solution on how to instruct the coal feed amount based on the constructed reinforcement learning model through steps 305 to 307, so as to instruct the input coal amount in the cement calcination process by giving a reasonable coal feed amount, put in as little coal as possible while ensuring the clinker quality as much as possible, to reduce costs and increase efficiency. Saved coal is also equivalent to reducing a corresponding amount of carbon dioxide emission to the atmosphere, which is conducive to striving for an environmentally friendly enterprise.

On the basis of the previous embodiment, although the above controlled variables are mainly affected by the adjustable variables, cement calcination is a very complicated process. There are many other sudden or indispensable factors that may cause some controlled variable changes, in turn affecting the clinker quality. Therefore, the following solution may also be used to determine whether other methods are required to adjust the controlled variables:

for the calciner temperature:

acquiring a current calciner temperature, and determining a simulated calciner coal feed amount corresponding to the current calciner temperature based on the first simulation model; and

adjusting the calciner temperature based on a plus or minus of the first difference, in response to a first difference between the simulated calciner coal feed amount and the theoretical calciner coal feed amount exceeding a first preset threshold.

Similarly, for the kiln current, the secondary air temperature, and the smoke chamber temperature:

acquiring a current kiln current, a current secondary air temperature, and a current smoke chamber temperature, and determining a simulated kiln head coal feed amount corresponding to the current kiln current, the current secondary air temperature, and the current smoke chamber temperature based on the second simulation model; and

adjusting the kiln current, the secondary air temperature, and the smoke chamber temperature based on the second difference, in response to a second difference between the simulated kiln head coal feed amount and the theoretical kiln head coal feed amount exceeding a second preset threshold.

Temperature control includes, but is not limited to, all effective means such as physical cooling or reduction of coal feed amount.

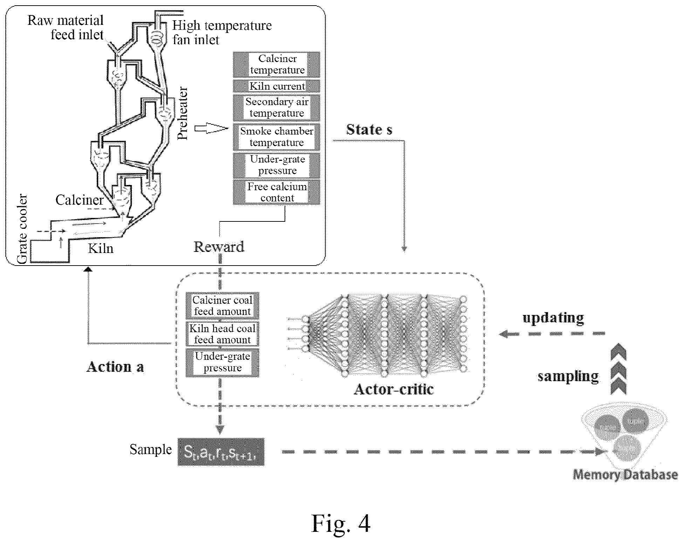

To deepen understanding, the present disclosure also provides an implementation solution in combination with an application scenario. Reference may be made to the schematic diagram as shown in Fig. 4.

An entire process of cement calcination may be seen in the schematic diagram of an apparatus given in the upper left corner of Fig. 4. First, feeding a raw material, and then sequentially going through four processes of preheater preheating, calciner heating, rotary kiln calcination, and grate cooler cooling to generate clinker. The entire process involves many controlled parameters, such as the calciner coal feed amount, or the kiln head coal feed amount, and these parameters may directly affect the quality of the clinker, that is, the free calcium content. In actual production, an enterprise usually requires that the free calcium content is between 0.5% and 1.5%. Through mechanism research, it is found that the free calcium content is low because the calcination temperature is too high, causing overburning, and the higher the corresponding coal feed amount, the higher the coal consumption. Therefore, in order to ensure low coal consumption under the premise of qualified quality, the free calcium content in a modeling process of the embodiments of the present disclosure is adjusted to be between 1%-1.5%, to reduce production costs as much as possible while ensuring quality.

The process parameters are adjusted based on the reinforcement learning model to reduce coal consumption while ensuring quality. The entire modeling process is very complicated. The following is a detailed introduction to the various parts of the construction process of the reinforcement learning model that the server is responsible for:

1) Construction of real-time prediction model on free calcium content

The free calcium content is measured about once an hour in the production process. Because it is required to control and adjust the coal feed amount and other parameters in real time, it is necessary to establish the real-time prediction model on the free calcium content. Since the free calcium content is mainly related to the calciner temperature, the kiln current, the secondary air temperature, the smoke chamber temperature and the under-grate pressure, the established model is:

Free calcium content = f (calciner temperature, kiln current, secondary air temperature, smoke chamber temperature, under-grate pressure); in an experiment, a large amount of historical data are used to fit f. In the present embodiment, the large amount of historical data are used to construct the prediction model through neural networks.

2) Construction of simulation environment for cement raw material calcination

To adjust the parameters using the reinforcement learning model, it is necessary to construct the simulation models in the cement calcination process. That is, after the coal feed amount is adjusted, how the controlled variables such as the calciner temperature, the kiln current, the secondary air temperature, or the smoke chamber temperature may change during calcination. In the industry, a first-order inertia model plus a hysteresis link are often selected to simulate a complex industrial system having large inertia and pure lag. By consulting relevant professional information, the calciner temperature is mainly related to the calciner coal feed amount, and the kiln current, the secondary air temperature, and the smoke chamber temperature are mainly related to the kiln head coal feed amount. A system model of the calciner temperature with respect to the calciner coal feed amount may be established, and a system model of the kiln current, the secondary air temperature, and the smoke chamber temperature with respect to the kiln head coal feed amount may be established.

3) Construction of reinforcement learning model

With the simulation models and the prediction model constructed in the above steps, the reinforcement learning model may be easily established. The present embodiment uses an Actor-critic reinforcement learning model, uses the three adjustable parameters: calciner coal feed amount, kiln head coal feed amount, and under-grate pressure as an Action of the reinforcement learning model, and temporarily ignores other parameters in the calcination process. The purpose is to ensure that a final free calcium content is between 1%-1.5%, and at the same time, when the feed amount is set at a certain level, the calciner coal feed amount and the kiln head coal feed amount should be as little as possible. Since the measurement standard of coal consumption is total coal feed amount/feed amount, it is assumed that the speed of the feed amount is fixed, that is, the feed amount per unit time is fixed, so the coal consumption only needs to consider the calciner coal feed amount and the kiln head coal feed amount.

Model details are as follows:

Action: is a three-dimensional vector, three-dimension continuous action, which is the calciner coal feed amount, the kiln head coal feed amount, and an under-grate pressure value. That is, these three parameters are output for control at every moment;

State: is a 14-dimensional (10-dimensional, after cutting some of the parameters corresponding to t-2) vector, which is calciner temperature t-2 (may be cut), t-1, a value at time t, the kiln current, the secondary air temperature and smoke chamber temperature t-2 (may be cut), t-1, a value at time t, a current value of the under-grate pressure, and a prediction value of the free calcium content given by a free calcium content prediction model constructed through the above steps. After each execution of an Action, State updates through the simulation environment;

Reward (reward value): since the purpose is to reduce coal consumption while ensuring quality, Reward is divided into two parts, that is, whether the free calcium content is within a target value range and a current coal feed amount. That is, Reward = - (kiln head coal feed amount + calciner coal feed amount)+100*I_({1%≤actual free calcium contents≤1.5%}). Here, I is an indicative function, when 1%≤actual free calcium content≤1.5%, the value of I is 1, otherwise the value of I is 0.

It may be seen from the above Reward formula that when the free calcium content meets the standard, the less the total coal feed amount, the greater the value of Reward.

A data processing step at the bottom of Fig. 4 is a parameter update process of the Actor-critic reinforcement learning model based on sample. First, a sample is selected from each actual Action (the parameters may be named as $S_t$, $\alpha_t$, $r_t$, $S_{t+1}$, etc.). Then, these samples are stored in a memory database in the form of tuple. Next, some data are selected from the memory database by sampling to update the parameters of the Actor-critic reinforcement learning model. Thus, the effectiveness and usability of the Actor-critic reinforcement learning model are maintained using this update method.

After the server is installed with the reinforcement learning model obtained by construction through the above construction steps, in the corresponding cement calcination scenario, the minimized coal feed amount may be subsequently determined based on the given free calcium content, so as to achieve cost decreasing and benefit increasing.

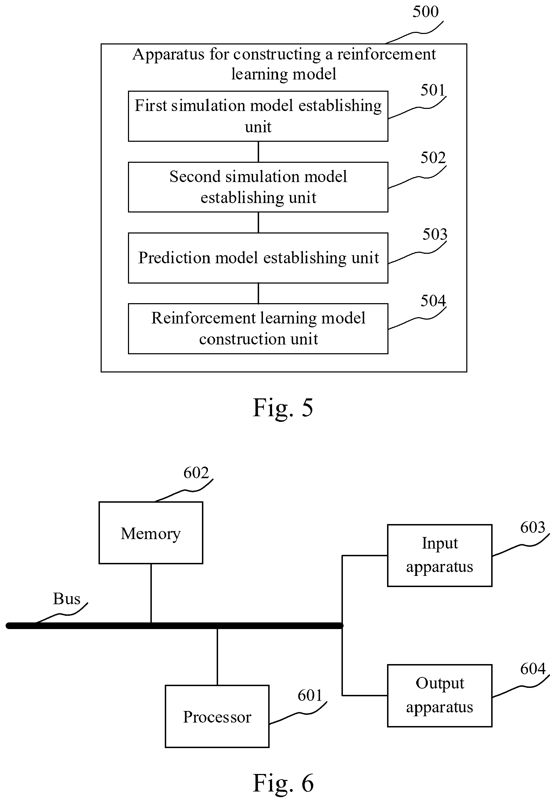

With further reference to Fig. 5, as an implementation of the method shown in the above figures, the present disclosure provides an embodiment of an apparatus for constructing a reinforcement learning model, and the apparatus embodiment corresponds to the method embodiment as shown in Fig. 2. The apparatus may be particularly applied to various electronic devices.

As shown in Fig. 5, an apparatus 500 for constructing a reinforcement learning model of the present embodiment may include: a first simulation model establishing unit 501, a second simulation model establishing unit 502, a prediction model establishing unit 503 and a reinforcement learning model construction unit 504. The first simulation model establishing unit 501 is configured to establish a first simulation model between a calciner coal feed amount and a calciner temperature. The second simulation model establishing unit 502 is configured to establish a second simulation model among a kiln head coal feed amount, a kiln current, a secondary air temperature, and a smoke chamber temperature. The prediction model establishing unit 503 is configured to establish a prediction model among: an under-grate pressure; the calciner temperature output by the first simulation model; the kiln current, the secondary air temperature, and the smoke chamber temperature output by the second simulation model; and a free calcium content. The reinforcement learning model construction unit 504 is configure to construct a reinforcement learning model that represents an association between a coal feed amount and the free calcium content according to a preset reinforcement learning model architecture, using the first simulation model, the second simulation model, and the prediction model; the coal feed amount including the calciner coal feed amount and the kiln head coal feed amount.

In the present embodiment, in the apparatus 500 for constructing a reinforcement learning model, for the particular processing and the technical effects thereof of the first simulation model establishing unit 501, the second simulation model establishing unit 502, the prediction model establishing unit 503 and the reinforcement learning model construction unit 504, reference may be made to the relevant descriptions of steps 201-204 in the corresponding embodiment of Fig. 2 respectively, and detailed description thereof will be omitted.

In some alternative implementations of the present embodiment, the apparatus 500 for constructing a reinforcement learning model may further include:

a given parameter receiving unit, configured to receive a target free calcium content given in a target scenario;

a theoretical coal feed amount determination unit, configured to determine a theoretical coal feed amount corresponding to the target free calcium content using the reinforcement learning model; where, the theoretical coal feed amount includes a theoretical calciner coal feed amount and a theoretical kiln head coal feed amount; and

a coal feeding operation instruction unit, configured to guide a calciner coal feeding operation and a kiln head coal feeding operation in the target scenario based on the theoretical coal feed amount.

In some alternative implementations of the present embodiment, the apparatus 500 for constructing a reinforcement learning model may further include:

a simulated calciner temperature determination unit, configured to acquire a current calciner temperature, and determine a simulated calciner coal feed amount corresponding to the current calciner temperature based on the first simulation model; and

a first adjusting unit, configured to adjust the calciner temperature based on a plus or minus of the first difference, in response to a first difference between the simulated calciner coal feed amount and the theoretical calciner coal feed amount exceeding a first preset threshold.

In some alternative implementations of the present embodiment, the apparatus 500 for constructing a reinforcement learning model may further include:

a simulated kiln head coal feed amount determination unit, configured to acquire a current kiln current, a current secondary air temperature, and a current smoke chamber temperature, and determine a simulated kiln head coal feed amount corresponding to the current kiln current, the current secondary air temperature, and the current smoke chamber temperature based on the second simulation model; and

a second adjusting unit, configured to adjust the kiln current, the secondary air temperature, and the smoke chamber temperature based on the second difference, in response to a second difference between the simulated kiln head coal feed amount and the theoretical kiln head coal feed amount exceeding a second preset thresho ld.

In some alternative implementations of the present embodiment, the reinforcement learning model construction unit 504 may include:
an A2C reinforcement learning model construction subunit, configured to construct the reinforcement learning model that represents the association between the coal feed amount and the free calcium content according to an Actor-Critic reinforcement learning model architecture.

In some alternative implementations of the present embodiment, the A2C reinforcement learning model construction subunit may be further configured to:

an Action configuration module, configured to construct the calciner coal feed amount, the kiln head coal feed amount, and the under-grate pressure as an Action represented by a three-dimensional vector;

a State configuration module, configured to construct a State represented by a ten-dimensional vector by at least using followings as a dimension respectively: a calciner temperature, a kiln current, a secondary air temperature, and a smoke chamber temperature at a previous moment; a calciner temperature, a kiln current, a secondary air temperature, a smoke chamber temperature and an under-grate pressure at a current moment; and a prediction value of the free calcium content output by the prediction model; wherein, after each execution of an Action, the State is updated through a preset simulation environment;

a Reward configuration module, configured to determine a Reward indicating whether the output prediction value of the free calcium content is within a preset target value range, and indicating a current coal feed amount; and

an A2C reinforcement learning model construction module, configured to construct the reinforcement learning model that represents the association between the coal feed amount and the free calcium content, based on the Action, the State and the Reward.

The present embodiment corresponds to the above method embodiment as the apparatus embodiment. Different from the existing technology that may not meet the needs of a complex scenario of cement calcination, the apparatus for constructing a reinforcement learning model provided in this embodiment of the present disclosure introduces the concept of reinforcement learning into a cement calcination scenario, based on the established simulation models and the prediction model, under the reinforcement learning architecture, the reinforcement learning model that may represent the corresponding relationship between the input coal feed amount under the influence of a plurality of parameters and the free calcium content of a final product is constructed. In addition, since the reinforcement learning model is different from the compensator characteristics of other machine learning models, it is more compatible with the complex and multi-parameter cement calcination scenario, making the determined corresponding relationship more accurate, and at the same time a strong generalization ability of the reinforcement learning model may also be more simply applied to other similar scenarios.

According to an embodiment of the present disclosure, the present disclosure also provides an electronic device for constructing a reinforcement learning model and a readable storage medium.

Fig. 6 shows a block diagram of an electronic device suitable for implementing the method for constructing a reinforcement learning model according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 6, the electronic device includes: one or more processors 601, a memory 602, and interfaces for connecting various components, including highspeed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of electronic devices may be connected, and the devices provide some necessary operations, for example, as a server array, a set of blade servers, or a multi-processor system. In Fig. 6, one processor 601 is used as an example.

The memory 602 is a non-transitory computer readable storage medium provided by the present disclosure. The memory stores instructions executable by at least one processor, so that the at least one processor performs the method for constructing a reinforcement learning model provided by the present disclosure. The non-transitory computer readable storage medium of the present disclosure stores computer instructions for causing a computer to perform the method for constructing a reinforcement learning model provided by the present disclosure.

The memory 602, as a non-transitory computer readable storage medium, may be used to store non-transitory software programs, non-transitory computer executable programs and modules, such as program instructions/modules corresponding to the method for constructing a reinforcement learning model in the embodiments of the present disclosure (for example, the first simulation model establishing unit 501, the second simulation model establishing unit 502, the prediction model establishing unit 503 and the reinforcement learning model construction unit 504 as shown in Fig. 5). The processor 601 executes the non-transitory software programs, instructions, and modules stored in the memory 602 to execute various functional applications and data processing of the server, that is, to implement the method for constructing a reinforcement learning model in the foregoing method embodiments.

The memory 602 may include a storage program area and a storage data area, where the storage program area may store an operating system and at least one function required application program; and the storage data area may store data created by the use of the electronic device according to the method for constructing a reinforcement learning model, etc. In addition, the memory 602 may include a highspeed random access memory, and may also include a non-transitory memory, such as at least one magnetic disk storage device, a flash memory device, or other non-transitory solid-state storage devices. In some embodiments, the memory 602 may optionally include memories remotely provided with respect to the processor 601, and these remote memories may be connected to the electronic device of the method for constructing a reinforcement learning model through a network. Examples of the above network include but are not limited to the Internet, intranet, local area network, mobile communication network, and combinations thereof.

The electronic device of the method for constructing a reinforcement learning model may further include: an input apparatus 603 and an output apparatus 604. The processor 601, the memory 602, the input apparatus 603, and the output apparatus 604 may be connected through a bus or in other methods. In Fig. 6, connection through a bus is used as an example.

The input apparatus 603 may receive input digital or character information, and generate key signal inputs related to user settings and function control of the electronic device of the method for constructing a reinforcement learning model, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that may be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN) and the Internet.

The computing system may include a client and a server. The client and the server are generally far from each other and usually interact through the communication network. The relationship between the client and the server is generated by computer programs that run on the corresponding computer and have a client-server relationship with each other. The server may be a cloud server, also known as a cloud computing server or a cloud host. The server is a host product in the cloud computing service system to solve the defects of management difficulty in traditional physical host and virtual private server (VPS) services Large, and weak business scalability.

According to the technical solution of the embodiments of the present disclosure, the concept of reinforcement learning is introduced into a cement calcination scenario, based on the established simulation models and the prediction model, under the reinforcement learning architecture, the reinforcement learning model that may represent the corresponding relationship between the input coal feed amount and the free calcium content of a final product under the influence of a plurality of parameters is constructed. In addition, since the reinforcement learning model is different from the compensator characteristics of other machine learning models, it is more compatible with the complex and multi-parameter cement calcination scenario, making the determined corresponding relationship more accurate, and at the same time a strong generalization ability of the reinforcement learning model may also be more simply applied to other similar scenarios.

The above particular embodiments do not constitute limitation on the protection scope of the present disclosure, which is defined through the appended claims. Those skilled in the art should understand that various modifications, combinations, sub-combinations and substitutions may be made according to design requirements and other factors.

## Claims

1. A computer-implemented method for constructing a reinforcement learning model and guiding a calciner coal feeding operation and kiln head coal feeding operation, the method comprising:

    establishing (201) a first simulation model between a calciner coal feed amount and a calciner temperature;
    establishing (202) a second simulation model among an adjustable variable of a kiln head coal feed amount, and controlled variables of a kiln current, a secondary air temperature, and a smoke chamber temperature;
    establishing (203) a prediction model among:

       an under-grate pressure;
       the calciner temperature output by the first simulation model;
       the kiln current, the secondary air temperature, and the smoke chamber temperature output by the second simulation model; and
       a free calcium content, the prediction model predicting a prediction value of a corresponding free calcium content based on actual values of the under-grate pressure, the calciner temperature, the kiln current, the secondary air temperature, and the smoke chamber temperature; and

    constructing (204) a reinforcement learning model that represents an association between a coal feed amount and the free calcium content according to a preset reinforcement learning model architecture, using the first simulation model, the second simulation model, and the prediction model; the coal feed amount comprising the calciner coal feed amount and the kiln head coal feed amount;
    receiving (305) a target free calcium content given in a target scenario;

    determining (306) a theoretical coal feed amount corresponding to the target free calcium content using the reinforcement learning model; wherein, the theoretical coal feed amount comprises a theoretical calciner coal feed amount and a theoretical kiln head coal feed amount; and
    guiding (307) a calciner coal feeding operation and a kiln head coal feeding operation in the target scenario based on the theoretical coal feed amount;

    wherein, the constructing (204) comprises:

    constructing the reinforcement learning model according to an Actor-Critic reinforcement learning model architecture;
    wherein the constructing the reinforcement learning model according to an Actor-Critic reinforcement learning model architecture comprises:

       constructing the calciner coal feed amount, the kiln head coal feed amount, and the under-grate pressure as an Action represented by a three-dimensional vector;
       constructing a State represented by a ten-dimensional vector by at least using followings as a dimension respectively:

          a calciner temperature, a kiln current, a secondary air temperature, and a smoke chamber temperature at a previous moment;
          a calciner temperature, a kiln current, a secondary air temperature, a smoke chamber temperature and an under-grate pressure at a current moment; and
          a prediction value of the free calcium content output by the prediction model;
          wherein, after each execution of an Action, the State is updated through a preset simulation environment;

       determining a Reward indicating whether the output prediction value of the free calcium content is within a preset target value range, and indicating a current coal feed amount; and
       constructing the reinforcement learning model that represents the association between the coal feed amount and the free calcium content, based on the Action, the State and the Reward.

2. The method according to claim 1, further comprising:

acquiring a current calciner temperature, and determining a simulated calciner coal feed amount corresponding to the current calciner temperature based on the first simulation model; and

adjusting the calciner temperature based on a plus or minus of a first difference between the simulated calciner coal feed amount and the theoretical calciner coal feed amount, in response to the first difference exceeding a first preset threshold.

3. The method according to claim 1, further comprising:

acquiring a current kiln current, a current secondary air temperature, and a current smoke chamber temperature, and determining a simulated kiln head coal feed amount corresponding to the current kiln current, the current secondary air temperature, and the current smoke chamber temperature based on the second simulation model; and

adjusting the kiln current, the secondary air temperature, and the smoke chamber temperature based on a second difference between the simulated kiln head coal feed amount and the theoretical kiln head coal feed amount, in response to the second difference exceeding a second preset threshold.

4. A data-processing apparatus for constructing a reinforcement learning model and guiding a calciner coal feeding operation and kiln head coal feeding operation, the apparatus comprising:

means for carrying out step of establishing a first simulation model between a calciner coal feed amount and a calciner temperature;

means for carrying out step of establishing a second simulation model among an adjustable variable of a kiln head coal feed amount, and controlled variables of a kiln current, a secondary air temperature, and a smoke chamber temperature;

means for carrying out step of establishing a prediction model among:

an under-grate pressure;
the calciner temperature output by the first simulation model; and
the kiln current, the secondary air temperature, and the smoke chamber temperature output by the second simulation model; and a free calcium content, the prediction model predicting a prediction value of a corresponding free calcium content based on actual values of the under-grate pressure, the calciner temperature, the kiln current, the secondary air temperature, and the smoke chamber temperature; and

means for carrying out step of constructing a reinforcement learning model that represents an association between a coal feed amount and the free calcium content according to a preset reinforcement learning model architecture, using the first simulation model, the second simulation model, and the prediction model; the coal feed amount comprising the calciner coal feed amount and the kiln head coal feed amount;

means for carrying out step of receiving a target free calcium content given in a target scenario;

means for carrying out step of determining a theoretical coal feed amount corresponding to the target free calcium content using the reinforcement learning model; wherein, the theoretical coal feed amount comprises a theoretical calciner coal feed amount and a theoretical kiln head coal feed amount; and

means for carrying out step of guiding a calciner coal feeding operation and a kiln head coal feeding operation in the target scenario based on the theoretical coal feed amount;

wherein, the means for carrying out step of constructing comprises:

an A2C reinforcement learning model construction subunit, configured to construct the reinforcement learning model according to an Actor-Critic reinforcement learning model architecture;

wherein the means for carrying out step of constructing reinforcement learning model comprises:

constructing the calciner coal feed amount, the kiln head coal feed amount, and the under-grate pressure as an Action represented by a three-dimensional vector;

constructing a State represented by a ten-dimensional vector by at least using followings as a dimension respectively:

a calciner temperature, a kiln current, a secondary air temperature, and a smoke chamber temperature at a previous moment;

a calciner temperature, a kiln current, a secondary air temperature, a smoke chamber temperature and an under-grate pressure at a current moment; and

a prediction value of the free calcium content output by the prediction model;

wherein, after each execution of an Action, the State is updated through a preset simulation environment;
determining a Reward indicating whether the output prediction value of the free calcium content is within a preset target value range, and indicating a current coal feed amount; and
constructing the reinforcement learning model that represents the association between the coal feed amount and the free calcium content, based on the Action, the State and the Reward.

5. The apparatus according to claim 4, further comprising:

means for carrying out step of acquiring a current calciner temperature, and determine a simulated calciner coal feed amount corresponding to the current calciner temperature based on the first simulation model; and
means for carrying out step of adjusting the calciner temperature based on a plus or minus of a first difference between the simulated calciner coal feed amount and the theoretical calciner coal feed amount, in response to the first difference exceeding a first preset threshold.

6. The apparatus according to claim 4, further comprising:

means for carrying out step of acquiring a current kiln current, a current secondary air temperature, and a current smoke chamber temperature, and determine a simulated kiln head coal feed amount corresponding to the current kiln current, the current secondary air temperature, and the current smoke chamber temperature based on the second simulation model; and
means for carrying out step of adjusting the kiln current, the secondary air temperature, and the smoke chamber temperature based on a second difference between the simulated kiln head coal feed amount and the theoretical kiln head coal feed amount, in response to the second difference exceeding a second preset threshold.

7. A non-transitory computer readable storage medium, storing computer instructions, the computer instructions, being used to cause a computer to perform the method according to any one of claims 1-3

8. A computer program product comprising a computer program, the computer program, when executed by a processor (601), implementing the method according to any one of claims 1-3.

**Patentansprüche**

1. Computer-implementiertes Verfahren zum Konstruieren eines Verstärkungslernmodells und Steuern einer Kalzinator-Kohlebeschickungsoperation und einer Ofenkopf-Kohlebeschickungsoperation, wobei das Verfahren umfasst:

Erstellen (201) eines ersten Simulationsmodells zwischen einer Kalzinator-Kohlebeschickungsmenge und einer Kalzinatortemperatur;
Erstellen (202) eines zweiten Simulationsmodells zwischen einer einstellbaren Variable einer Ofenkopf-Kohlebeschickungsmenge und gesteuerten Variablen eines Ofenstroms, einer Sekundärlufttemperatur und einer Rauchkammertemperatur;
Erstellen (203) eines Vorhersagemodells unter:

einem Unter-Rost-Druck;
der Kalzinatortemperatur, die vom ersten Simulationsmodell ausgegeben wird;
dem Ofenstrom, der Sekundärlufttemperatur und der Rauchkammertemperatur, die vom zweiten Simulationsmodell ausgegeben werden; und
einem Gehalt an freiem Kalzium, wobei das Vorhersagemodell einen Vorhersagewert eines entsprechenden Gehalts an freiem Kalzium basierend auf den tatsächlichen Werten des Unter-Rost-Drucks, der Kalzinatortemperatur, des Ofenstroms, der Sekundärlufttemperatur und der Rauchkammertemperatur vorhersagt; und

Konstruieren (204) eines Verstärkungslernmodells, das einen Zusammenhang zwischen einer Kohlebeschickungsmenge und dem Gehalt an freiem Kalzium darstellt, gemäß einer vorgegebenen Verstärkungslernmodell-Architektur unter Verwendung des ersten Simulationsmodells, des zweiten Simulationsmodells und des Vorhersagemodells; wobei die Kohlebeschickungsmenge die Kalzinator-Kohlebeschickungsmenge und die Ofenkopf-Kohlebeschickungsmenge umfasst;
Empfangen (305) eines Sollgehalts an freiem Kalzium wie in einem SollSzenario angegeben;
Bestimmen (306) einer theoretischen Kohlebeschickungsmenge entsprechend dem Sollgehalt an freiem Kalzium mithilfe des Verstärkungslernmodells; wobei die theoretische Kohlebeschickungsmenge eine theoretische Kalzinator-Kohlebeschickungsmenge und eine theoretische Ofenkopf-Kohlebeschickungsmenge umfasst; und

Steuern (307) einer Kalzinator-Kohlebeschickungsoperation und einer Ofenkopf-Kohlebeschickungsoperation im Sollszenario basierend auf der theoretischen Kohlebeschickungsmenge;

wobei das Konstruieren (204) umfasst:

Konstruieren des Verstärkungslernmodells gemäß einer akteurkritischen Verstärkungslernmodell-Architektur;

wobei das Konstruieren des Verstärkungslernmodells gemäß einer akteurkritischen Verstärkungslernmodell-Architektur umfasst:

Konstruieren der Kalzinator-Kohlebeschickungsmenge, der Ofenkopf-Kohlebeschickungsmenge und des Unter-Rost-Drucks als Aktion, die durch einen dreidimensionalen Vektor dargestellt ist;

Konstruieren eines Status, der durch einen zehndimensionalen Vektor dargestellt ist, indem jeweils eines der folgenden als Dimension verwendet wird:

eine Kalzinatortemperatur, ein Ofenstrom, eine sekundäre Lufttemperatur und eine Rauchkammertemperatur zu einem vorherigen Zeitpunkt;

eine Kalzinatortemperatur, ein Ofenstrom, eine sekundäre Lufttemperatur, eine Rauchkammertemperatur und ein Unter-Rost-Druck zu einem aktuellen Zeitpunkt; und

ein Vorhersagewert für den Gehalt an freiem Kalzium, der vom Vorhersagemodell ausgegeben wird;

wobei nach jeder Ausführung einer Aktion der Status durch eine voreingestellte Simulationsumgebung aktualisiert wird;

Bestimmen einer Belohnung, die anzeigt, ob der ausgegebene Vorhersagewert des Gehalts an freiem Kalzium innerhalb eines voreingestellten Sollwertbereichs liegt, und Anzeigen einer aktuellen Kohlebeschickungsmenge; und

Konstruieren des Verstärkungslernmodells, das den Zusammenhang zwischen der Kohlebeschickungsmenge und dem Gehalt an freiem Kalzium darstellt, basierend auf der Aktion, dem Status und der Belohnung.

2. Verfahren gemäß Anspruch 1, ferner umfassend:

Erfassen einer aktuellen Kalzinatortemperatur und Bestimmen einer simulierten Kalzinator-Kohlebeschickungsmenge, die der aktuellen Kalzinatortemperatur entspricht, basierend auf dem ersten Simulationsmodell; und

Einstellen der Kalzinatortemperatur basierend auf einem Plus oder Minus einer ersten Differenz zwischen der simulierten Kalzinator-Kohlebeschickungsmenge und der theoretischen Kalzinator-Kohlebeschickungsmenge in Reaktion darauf, dass die erste Differenz einen ersten voreingestellten Schwellenwert überschreitet.

3. Verfahren gemäß Anspruch 1, ferner umfassend:

Erfassen eines aktuellen Ofenstroms, einer aktuellen Sekundärlufttemperatur und einer aktuellen Rauchkammertemperatur und Bestimmen einer simulierten Ofenkopf-Kohlebeschickungsmenge, die dem aktuellen Ofenstrom, der aktuellen Sekundärlufttemperatur und der aktuellen Rauchkammertemperatur entspricht, basierend auf dem zweiten Simulationsmodell; und

Einstellen des Ofenstroms, der Sekundärlufttemperatur und der Rauchkammertemperatur basierend auf einer zweiten Differenz zwischen der simulierten Ofenkopf-Kohlebeschickungsmenge und der theoretischen Ofenkopf-Kohlebeschickungsmenge in Reaktion darauf, dass die zweite Differenz eine zweite voreingestellte Schwelle überschreitet.

4. Datenverarbeitungseinrichtung zum Konstruieren eines Verstärkungslernmodells und Steuern einer Kalzinator-Kohlebeschickungsoperation und einer Ofenkopf-Kohlebeschickungsoperation, wobei die Einrichtung umfasst:

Mittel zum Ausführen eines Schritts des Erstellens eines ersten Simulationsmodells zwischen einer Kalzinator-Kohlebeschickungsmenge und einer Kalzinatortemperatur;

Mittel zum Ausführen eines Schritts des Erstellens eines zweiten Simulationsmodells zwischen einer einstellbaren Variable einer Ofenkopf-Kohlebeschickungsmenge und gesteuerten Variablen eines Ofenstroms, einer Sekundärlufttemperatur und einer Rauchkammertemperatur;

Mittel zum Ausführen eines Schritts des Erstellens eines Vorhersagemodells unter:

einem Unter-Rost-Druck;

der Kalzinatortemperatur, die vom ersten Simulationsmodell ausgegeben wird; und

dem Ofenstrom, der Sekundärlufttemperatur und der Rauchkammertemperatur, die vom zweiten Simulationsmodell ausgegeben werden; und

einem Gehalt an freiem Kalzium, wobei das Vorhersagemodell einen Vorhersagewert eines entsprechenden Gehalts an freiem Kalzium basierend auf den tatsächlichen Werten des Unter-Rost-Drucks, der Kalzinatortemperatur, des Ofenstroms, der Sekundärlufttemperatur und der Rauchkammertemperatur vorhersagt; und

Mittel zum Ausführen eines Schritts des Konstruierens eines Verstärkungslernmodells, das einen Zusammenhang zwischen einer Kohlebeschickungsmenge und dem Gehalt an freiem Kalzium darstellt, gemäß einer vorgegebenen Verstärkungslernmodell-Architektur unter Verwendung des ersten Simulationsmodells, des zweiten Simulationsmodells und des Vorhersagemodells; wobei die Kohlebeschickungsmenge die Kalzinator-Kohlebeschickungsmenge und die Ofenkopf-Kohlebeschickungsmenge umfasst;

Mittel zum Ausführen eines Schritts des Empfangens eines Sollgehalts an freiem Kalzium wie in einem Sollszenario angegeben;

Mittel zum Ausführen eines Schritts des Bestimmens einer theoretischen Kohlebeschickungsmenge entsprechend dem Sollgehalt an freiem Kalzium mithilfe des Verstärkungslernmodells; wobei die theoretische Kohlebeschickungsmenge eine theoretische Kalzinator-Kohlebeschickungsmenge und eine theoretische Ofenkopf-Kohlebeschickungsmenge umfasst; und

Mittel zum Ausführen eines Schritts des Steuerns einer Kalzinator-Kohlebeschickungsoperation und einer Ofenkopf-Kohlebeschickungsoperation im Sollszenario basierend auf der theoretischen Kohlebeschickungsmenge;

wobei das Mittel zum Ausführen des Konstruktionsschritts umfasst:

eine Konstruktionsuntereinheit für ein A2C-Verstärkungslernmodell, die ausgelegt ist zum Konstruieren des Verstärkungslernmodells gemäß einer akteurkritischen Verstärkungslernmodell-Architektur;

wobei das Mittel zum Ausführen des Schritts des Konstruierens des Verstärkungslernmodells umfasst:

Konstruieren der Kalzinator-Kohlebeschickungsmenge, der Ofenkopf-Kohlebeschickungsmenge und des Unter-Rost-Drucks als Aktion, die durch einen dreidimensionalen Vektor dargestellt ist;

Konstruieren eines Status, der durch einen zehndimensionalen Vektor dargestellt ist, indem jeweils eines der folgenden als Dimension verwendet wird:

eine Kalzinatortemperatur, ein Ofenstrom, eine sekundäre Lufttemperatur und eine Rauchkammertemperatur zu einem vorherigen Zeitpunkt;

eine Kalzinatortemperatur, ein Ofenstrom, eine sekundäre Lufttemperatur, eine Rauchkammertemperatur und ein Unter-Rost-Druck zu einem aktuellen Zeitpunkt; und

ein Vorhersagewert für den Gehalt an freiem Kalzium, der vom Vorhersagemodell ausgegeben wird;

wobei nach jeder Ausführung einer Aktion der Status durch eine voreingestellte Simulationsumgebung aktualisiert wird;

Bestimmen einer Belohnung, die anzeigt, ob der ausgegebene Vorhersagewert des Gehalts an freiem Kalzium innerhalb eines voreingestellten Sollwertbereichs liegt, und Anzeigen einer aktuellen Kohlebeschickungsmenge; und

Konstruieren des Verstärkungslernmodells, das den Zusammenhang zwischen der Kohlebeschickungsmenge und dem Gehalt an freiem Kalzium darstellt, basierend auf der Aktion, dem Status und der Belohnung.

**5.** Einrichtung gemäß Anspruch 4, ferner umfassend:

Mittel zum Ausführen eines Schritts des Erfassens einer aktuellen Kalzinatortemperatur und Bestimmen einer simulierten Kalzinator-Kohlebeschickungsmenge, die der aktuellen Kalzinatortemperatur entspricht, basierend auf dem ersten Simulationsmodell; und

Mittel zum Ausführen eines Schritts des Einstellens der Kalzinatortemperatur basierend auf einem Plus oder Minus einer ersten Differenz zwischen der simulierten Kalzinator-Kohlebeschickungsmenge und der theoretischen Kalzinator-Kohlebeschickungsmenge in Reaktion darauf, dass die erste Differenz einen ersten voreingestellten Schwellenwert überschreitet.

**6.** Einrichtung gemäß Anspruch 4, ferner umfassend:

Mittel zum Ausführen eines Schritts des Erfassens eines aktuellen Ofenstroms, einer aktuellen Sekundärlufttemperatur und einer aktuellen Rauchkammertemperatur und Bestimmen einer simulierten Ofenkopf-Kohlebeschickungsmenge, die dem aktuellen Ofenstrom, der aktuellen Sekundärlufttemperatur und der aktuellen Rauchkammertemperatur entspricht, basierend auf dem zweiten Simulationsmodell; und Mittel zum Ausführen eines Schritts des Einstellens des Ofenstroms, der Sekundärlufttemperatur und der Rauchkammertemperatur basierend auf einer zweiten Differenz zwischen der simulierten Ofenkopf-Kohlebeschickungsmenge und der theoretischen Ofenkopf-Kohlebeschickungsmenge in Reaktion darauf, dass die zweite Differenz einen zweiten voreingestellten Schwellenwert überschreitet.

7. Nicht-transitorisches, computerlesbares Speichermedium, das Computeranweisungen speichert, wobei die Computeranweisungen verwendet werden, um einen Computer zu veranlassen, das Verfahren gemäß einem der Ansprüche 1-3 durchzuführen.

8. Computerprogrammprodukt, das ein Computerprogramm umfasst, wobei das Computerprogramm, wenn es durch einen Prozessor (601) ausgeführt wird, das Verfahren gemäß einem der Ansprüche 1-3 implementiert.

## Revendications

1. Procédé mis en oeuvre par ordinateur pour construire un modèle d'apprentissage par renforcement et guider une opération d'alimentation en charbon pour four de calcination et une opération d'alimentation en charbon pour tête de four, le procédé comprenant :

l'établissement (201) d'un premier modèle de simulation entre une quantité d'alimentation en charbon pour four de calcination et une température de calcination ;
l'établissement (202) d'un deuxième modèle de simulation entre une variable réglable de la quantité d'alimentation en charbon pour tête de four et des variables régulées d'un courant de four, d'une température d'air secondaire et d'une température de chambre de fumée ;
l'établissement (203) d'un modèle de prédiction parmi :

une pression sous-grille ;
la température de four de calcination produite par le premier modèle de simulation ;
le courant du four, la température d'air secondaire et la température de chambre à fumée produites par le deuxième modèle de simulation ; et

une teneur en calcium libre, le modèle de prédiction prédisant une valeur de prédiction d'une teneur en calcium libre correspondante en fonction de valeurs réelles de la pression sous-grille, de la température de four à calcination, du courant de four, de la température d'air secondaire et de la température de chambre de fumée ; et

la construction (204) d'un modèle d'apprentissage par renforcement qui représente une association entre une quantité d'alimentation en charbon et la teneur en calcium libre selon une architecture de modèle d'apprentissage par renforcement prédéfinie, en utilisant le premier modèle de simulation, le deuxième modèle de simulation et le modèle de prédiction ; la quantité d'alimentation en charbon comprenant la quantité d'alimentation en charbon pour four de calcination et la quantité d'alimentation en charbon pour tête de four ;
la réception (305) d'une teneur en calcium libre cible donnée dans un scénario cible ;
la détermination (306) d'une quantité d'alimentation en charbon théorique correspondant à la teneur en calcium libre cible à l'aide du modèle d'apprentissage par renforcement ; dans lequel la quantité d'alimentation en charbon théorique comprend une quantité d'alimentation en charbon pour four de calcination théorique et une quantité d'alimentation en charbon pour tête de four théorique ; et
le guidage (307) d'une opération d'alimentation en charbon pour four de calcination et d'une opération d'alimentation en charbon pour tête de four dans le scénario cible en fonction de la quantité d'alimentation en charbon théorique ;
dans lequel la construction (204) comprend :

la construction du modèle d'apprentissage par renforcement selon une architecture de modèle d'apprentissage par renforcement acteur-critique ;
dans lequel la construction du modèle d'apprentissage par renforcement selon une architecture de modèle d'apprentissage par renforcement acteur-critique comprend :

la construction de la quantité d'alimentation en charbon pour four de calcination, la quantité d'alimentation en charbon pour tête de four et la pression sous-grille en tant qu'action représentée par un vecteur tridimensionnel ;
la construction d'un état représenté par un vecteur à dix dimensions en utilisant au moins les éléments suivants en tant que dimension respectivement :

une température de four de calcination, un courant de four, une température d'air secondaire et une température de chambre de fumée à un moment antérieur ; une température de four de calcination, un courant de four, une température d'air secondaire, une température de chambre à fumée et une pression sous-grille à un moment actuel ; et une valeur de prédiction de la teneur en calcium libre produite par le modèle de prévision ; dans lequel, après chaque exécution d'une action, l'état est mis à jour par le biais d'un environnement de simulation prédéfini ;

la détermination d'une récompense indiquant que la valeur de prédiction de sortie de la teneur en calcium libre se situe ou non dans une plage de valeurs cibles prédéfinie, et l'indication d'une quantité d'alimentation en charbon actuelle ; et la construction du modèle d'apprentissage par renforcement qui représente l'association entre la quantité d'alimentation en charbon et la teneur en calcium libre, en fonction de l'action, de l'état et de la récompense.

2.  Procédé selon la revendication 1, comprenant en outre :

l'acquisition d'une température de four de calcination actuelle et la détermination d'une quantité d'alimentation en charbon de four de calcination simulée correspondant à la température de four de calcination actuelle en fonction du premier modèle de simulation ; et le réglage de la température de four à calcination en fonction d'un plus ou d'un moins d'une première différence entre la quantité d'alimentation en charbon pour four de calcination simulée et la quantité d'alimentation en charbon pour four de calcination théorique, quand la première différence dépasse un premier seuil prédéfini.

3.  Procédé selon la revendication 1, comprenant en outre :

l'acquisition d'un courant de four actuel, d'une température d'air secondaire actuelle et d'une température de chambre à fumée actuelle, et la détermination d'une quantité d'alimentation en charbon pour tête de four simulée correspondant au courant de four actuel, à la température d'air secondaire actuelle et à la température de chambre à fumée actuelle en fonction du deuxième modèle de simulation ; et le réglage du courant de four, de la température d'air secondaire et de la température de chambre à fumée en fonction d'une deuxième différence entre la quantité d'alimentation en charbon pour tête de four simulée et la quantité d'alimentation en charbon pour tête de four théorique, quand la deuxième différence dépasse un deuxième seuil prédéfini.

4.  Appareil de traitement d'informations pour construire un modèle d'apprentissage par renforcement et guider une opération d'alimentation en charbon pour four de calcination et une opération d'alimentation en charbon pour tête de four, l'appareil comprenant :

un moyen de réalisation d'une étape d'établissement d'un premier modèle de simulation entre une quantité d'alimentation en charbon pour four de calcination et une température de four de calcination ; un moyen de réalisation d'une étape d'établissement d'un deuxième modèle de simulation entre une variable réglable de la quantité d'alimentation en charbon pour tête de four et des variables régulées d'un courant de four, d'une température d'air secondaire et d'une température de chambre à fumée ; un moyen de réalisation d'une étape d'établissement d'un modèle de prédiction parmi :

une pression sous-grille ; la température de four de calcination produite par le premier modèle de simulation ; le courant du four, la température d'air secondaire et la température de chambre à fumée produites par le deuxième modèle de simulation ; et une teneur en calcium libre, le modèle de prédiction prédisant une valeur de prédiction d'une teneur en calcium libre correspondante en fonction de valeurs réelles de la pression sous-grille, de la température de four à calcination, du courant de four, de la température d'air secondaire et de la température de chambre de fumée ; et

un moyen de réalisation d'une étape de construction d'un modèle d'apprentissage par renforcement qui représente une association entre une quantité d'alimentation en charbon et la teneur en calcium libre selon une architecture de modèle d'apprentissage par renforcement prédéfinie, en utilisant le premier modèle de simulation, le deuxième modèle de simulation et le modèle de prédiction ; la quantité d'alimentation en charbon comprenant la quantité d'alimentation en charbon pour four de calcination et la quantité d'alimentation en charbon pour tête de four ;

un moyen de réalisation d'une étape de réception d'une teneur en calcium libre cible donnée dans un scénario cible ;

un moyen de réalisation d'une étape de détermination d'une quantité d'alimentation en charbon théorique correspondant à la teneur en calcium libre cible à l'aide du modèle d'apprentissage par renforcement ; dans lequel la quantité d'alimentation en charbon théorique comprend une quantité d'alimentation en charbon pour four de calcination théorique et une quantité d'alimentation en charbon pour tête de four théorique ; et

un moyen de réalisation d'une étape de guidage d'une opération d'alimentation en charbon pour four de calcination et d'une opération d'alimentation en charbon pour tête de four dans le scénario cible en fonction de la quantité d'alimentation en charbon théorique ;

dans lequel le moyen de réalisation d'une étape de construction comprend :

une sous-unité de construction de modèle d'apprentissage par renforcement A2C, configurée pour construire le modèle d'apprentissage par renforcement selon une architecture de modèle d'apprentissage par renforcement acteur-critique ;

dans lequel le moyen de réalisation d'une étape de construction du modèle d'apprentissage par renforcement comprend :

la construction de la quantité d'alimentation en charbon pour four de calcination, de la quantité d'alimentation en charbon pour tête de four et de la pression sous-grille en tant qu'action représentée par un vecteur tridimensionnel ;

la construction d'un état représenté par un vecteur à dix dimensions en utilisant au moins les éléments suivants en tant que dimension respectivement :

une température de four de calcination, un courant de four, une température d'air secondaire et une température de chambre de fumée à un moment antérieur ;

une température de four de calcination, un courant de four, une température d'air secondaire, une température de chambre à fumée et une pression sous-grille à un moment actuel ; et

une valeur de prédiction de la teneur en calcium libre produite par le modèle de prévision ;

dans lequel, après chaque exécution d'une action, l'état est mis à jour par le biais d'un environnement de simulation prédéfini ;

la détermination d'une récompense indiquant que la valeur de prédiction de sortie de la teneur en calcium libre se situe ou non dans une plage de valeurs cibles prédéfinie, et l'indication d'une quantité d'alimentation en charbon actuelle ; et

la construction du modèle d'apprentissage par renforcement qui représente l'association entre la quantité d'alimentation en charbon et la teneur en calcium libre, en fonction de l'action, de l'état et de la récompense.

5. Appareil selon la revendication 4, comprenant en outre :

un moyen pour réaliser une étape d'acquisition d'une température de four de calcination actuelle et de détermination d'une quantité d'alimentation en charbon de four de calcination simulée correspondant à la température de four de calcination actuelle en fonction du premier modèle de simulation ; et

un moyen pour réaliser une étape de réglage de la température de four à calcination en fonction d'un plus ou d'un moins d'une première différence entre la quantité d'alimentation en charbon pour four de calcination simulée et la quantité d'alimentation en charbon pour four de calcination théorique, quand la première différence dépasse un premier seuil prédéfini.

6. Appareil selon la revendication 4, comprenant en outre :

un moyen pour réaliser une étape d'acquisition d'un courant de four actuel, d'une température d'air secondaire actuelle et d'une température de chambre à fumée actuelle, et de détermination d'une quantité d'alimentation en charbon pour tête de four simulée correspondant au courant de four actuel, à la température d'air secondaire actuelle et à la température de chambre à fumée actuelle en fonction du deuxième modèle de simulation ; et

un moyen pour réaliser une étape de réglage du courant de four, de la température d'air secondaire et de la température de chambre à fumée en fonction d'une deuxième différence entre la quantité d'alimentation en charbon pour tête de four simulée et la quantité d'alimentation en charbon pour tête de four théorique, quand la deuxième différence dépasse un deuxième seuil prédéfini.

**7.** Support de stockage non transitoire lisible par ordinateur, stockant des instructions informatiques, les instructions informatiques servant à amener un ordinateur à réaliser le procédé selon l'une quelconque des revendications 1 à 3.

**8.** Produit d'ordinateur comprenant un programme d'ordinateur, le programme d'ordinateur, à son exécution par un processeur (601), mettant en oeuvre le procédé selon l'une quelconque des revendications 1 à 3.

<u>100</u>

Fig. 1

<u>200</u>

| | |
|---|---|
| Establishing a first simulation model between a calciner coal feed amount and a calciner temperature | 201 |
| Establishing a second simulation model among a kiln head coal feed amount, a kiln current, a secondary air temperature, and a smoke chamber temperature | 202 |
| Establishing a prediction model among: an under-grate pressure; the calciner temperature output by the first simulation model; the kiln current, the secondary air temperature, and the smoke chamber temperature output by the second simulation model; and a free calcium content | 203 |
| Constructing a reinforcement learning model that represents an association between a coal feed amount and the free calcium content according to a preset reinforcement learning model architecture, using the first simulation model, the second simulation model, and the prediction model | 204 |

Fig. 2

300

Fig. 3

Fig. 4

500

Apparatus for constructing a reinforcement
learning model

First simulation model establishing
unit
501

Second simulation model
establishing unit
502

Prediction model establishing unit
503

Reinforcement learning model
construction unit
504

Fig. 5

602

Memory

603
Input
apparatus

Bus

601
Processor

604
Output
apparatus

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109165798 A
- CN 109761517 A
- CN 106202946 A
- CN 109147878 A

**Non-patent literature cited in the description**

- **ZHOU XIAOJIE et al.** Supervisory Control for Rotary Kiln Temperature Based on Reinforcement Learning. *LECTURE NOTES IN CONTROL AND INFORMATION SCIENCES,* 01 January 2006, vol. 344, 428-437